# EUROPEAN PATENT APPLICATION

(11) **EP 2 037 115 A1**
(43) Date of publication of application: **18.03.2009**
(21) Application number: 07114877.9
(22) Date of filing: 23.08.2007
(51) Int. Cl.: F02M 21/02, F02M 31/20, F02M 37/00

(54) **System for fuelling a combustion engine**

(71) Applicant: Nederlandse Organisatie voor Toegepast- Natuurwetenschappelijk Onderzoek TNO, 2628 VK The Hague (NL)
(72) Inventor: The designation of the inventor has not yet been filed
(74) Representative: Hatzmann, Martin

(57) **Abstract**

System for fuelling combustion chambers (2) of a combustion engine by means of high pressure fuel injection into those combustion chambers of a fuel (7) which is gaseous at atmospheric conditions, e.g. LPG. An injection pressure pump (4,6) is provided for bringing the relevant fuel at the required injection pressure and fuel admission control means (5) for control of the fuel to the combustion chambers. A fuel tank (3) is provided and a fuel pump (6) having its inlet (6a) connected to the fuel tank and its outlet (6b) connected to a fuel circulation circuit (8) which is, at its other side (8b), connected to the fuel tank (3), which fuel circulation circuit is connected, directly or indirectly, to said fuel admission control means. The fuel circulation circuit provides keeping the LPG liquid by using the fuel transfer pump for fuel cooling by circulation through the storage tank (3) and a cooler (9).

## Description

The invention concerns a system for fuelling combustion chambers of a combustion engine by means of high pressure fuel injection into those combustion chambers of a fuel which is gaseous at atmospheric conditions, hereinafter indicated as (however, not restricting the invention in any way) "LPG" for the sake of simplicity. Such system normally will comprise any kind of injection pressure pump for bringing the relevant fuel at the required injection pressure, as well as fuel admission control means for controlling the fuel flow to the combustion chambers. The system, moreover, will comprise a pressure resistant fuel tank in which the fuel is kept liquid. Known as such is to provide a fuel pump having its inlet connected to any fuel tank, in order to transfer a fuel from the relevant tank to the combustion engine.

Problems arise when transferring (liquid) LPG to the combustion chambers of an engine for directly injected fuel, especially within the engine compartment. Within that compartment the temperature may be high. Therefore, the LPG tends to become gaseous, which may cause improper operation and/or damage of the injection pump. Moreover, the combustion chamber, e.g. the fuel injection nozzles are designed for the processing of liquid fuel and not of (partly) gaseous fuel, causing improper operation and/or damage of the proper combustion system.

Thus (premature) gasification of the liquefied gas fuel (LPG etc.) is a serious problem for direct injection combustion engines.

The present invention aims to solve this problem by providing a system as indicated in the preamble, comprising a fuel pump having its inlet connected to the fuel tank and its outlet connected to a fuel circulation circuit being, at its other side, connected to the fuel tank, which fuel circulation circuit is connected to said fuel admission control means.

In short, the fuel circulation circuit is intended for:
- keeping the fuel liquid by means of a constant pressure exerted by the fuel pump which - due to the close nature of the fuel circulation circuit - serves as fuel transfer pump towards the (hot) area of the proper combustion engine, and, besides, as a fuel circulation pump;
- keeping the fuel cool by (re)circulating the fuel flow between the (rather cool) tank content (outside the engine compartment) and the combustion area (injection pump, combustion chambers); especially when the flow capacity from the tank to the engine is chosen rather broad, which will enable substantial (re)circulation of the fuel through the fuel circulation circuit, thus enabling proper and homogeneous conditioning of the fuel.

In practice, in many cases it will preferred to fuel an engine with two fuels e.g. gasoline (petrol) and a low boiling point fuel like propane or LPG (mixture of propane and butane). Such bi-fuel system may comprise then:
- a first sub-system for fuelling the combustion chambers with a fuel which is liquid at atmospheric conditions, e.g. gasoline;
- a second sub-system for fuelling the combustion chambers with a fuel which is gaseous at atmospheric conditions, e.g. LPG;
- each sub-system comprising an injection pressure pump for bringing the relevant fuel at the required injection pressure;
- fuel admission control means for connecting either the first or the second sub-system to the combustion chambers;
- the second sub-system comprising a fuel tank and a fuel pump having its inlet connected to the fuel tank and its outlet connected to a fuel circulation circuit being, at its other side, connected to the fuel tank, which fuel circulation circuit is connected to said fuel admission control means.

The operation and advantages of this bi-fuel system are similar to those of the only LPG system presented above.

About the fuel transfer/circulation pump which provides the flow through the fuel circulation circuit, this fuel pump may arranged to bring the fuel circulation circuit at an intermediate pressure, between the pressure within the fuel tank and the injection pressure, while (a branch of) the fuel circulation circuit is connected to said injection pressure pump.

Alternatively, the fuel pump may be arranged to bring the fuel circulation circuit (directly) at said injection pressure, while the fuel circulation circuit is connected directly to the fuel admission control means. In this embodiment the pump operates as a combined fuel transfer pump (from the tank to the injection/combustion area, circulation pump for the fuel circulation circuit, injection (pressure) pump feeding the combustion chambers, thus avoiding a separate injection pump.

To increase and support the cooling effect of the fuel circulation circuit this circuit may comprise (additional) cooling means for cooling the fuel circulating within the fuel circulation circuit.

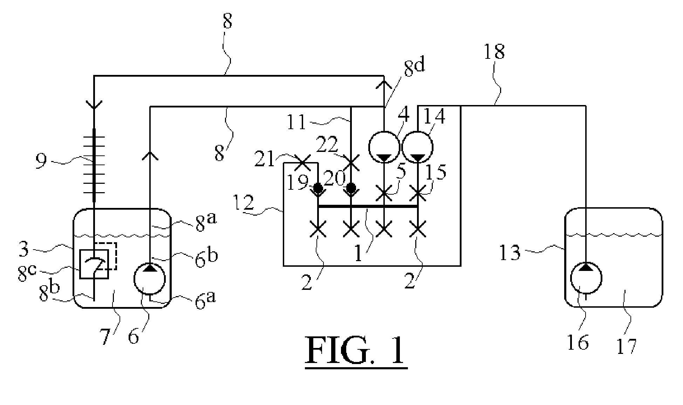

Next the invention will be elucidated with reference to figure 1, which shows schematically an embodiment of the present invention.

The system in figure 1 comprises combustion chambers (not shown) of a combustion engine including a high pressure fuel distribution rail 1 and injection nozzles 2. A tank 3 contains fuel which is gaseous at atmospheric conditions, e.g. LPG or propane. An injection pump 4 provides bringing the fuel at the required (high) injection pressure, e.g. about 30 to 100 bar. Fuel admission control means are provided in the form of valves 5. The system, moreover, comprises a fuel pump 6 having its inlet 6a or suction side connected to the fuel tank (i.e. the fuel 7 inside it) and its outlet 6b connected to one side 8a of a fuel circulation circuit 8 being, at its other side 8b, connected (again) to the fuel in tank 3, via a pressure control valve 8c. The fuel circulation circuit 8, moreover, is connected to said fuel admission control means 5, via a supply branch 8d and the high pressure injection pump 4.

The fuel circulation circuit 8 provides keeping the fuel liquid by means of a constant pressure exerted by the fuel pump 6 which serves as fuel transfer pump towards the combustion chambers, via part of the fuel circulation circuit 8 between the pump 6 and the branch 8d, a connection pipe interconnecting branch 8d and the injection pump 4, the admission valve 5, the distribution rail 1. Moreover, the fuel pump 6 functions as a fuel circulation pump for letting the fuel circulate through the fuel circulation circuit 8, i.e. from the pump's outlet 6b, via the entrance 8a, through the transport pipes 8, the pressure control valve 8c and the circuit end 8b, the fuel stored in the tank 7 and back to the entrance 6a of the pump 6.

Moreover, the fuel circulation circuit 8 provides keeping the fuel cool by circulating the fuel flow between the (rather cool) tank content 7 (after all outside the engine compartment) and the combustion area (injection pump, combustion chambers). The cooling of the fuel circulation circuit 8 is still improved by means of a fluid cooler 9 (e.g. an air/fluid heat exchanger or a fluid/fluid exchanger.

The system in figure 1 is a preferred - for several reasons, e.g. related to the availability of LPG which is less than that of gasoline - bi-fuel system, comprising a first sub-system for fuelling the combustion chambers with a fuel which is liquid at atmospheric conditions, e.g. gasoline, and a second sub-system for fuelling the combustion chambers with a fuel which is gaseous at atmospheric conditions, viz. LPG (or propane). As can be seen in figure 1, each sub-system comprises an injection pressure pump for bringing the relevant fuel at the required injection pressure: the injection pump 4 for the LPG fuelling sub-system (second sub-system; left side of figure 1) and an injection pump 14 for the gasoline fuelling sub-system (first sub-system; right side of figure 1).

Both sub-systems have separate - however, cooperating via a fuelling control system (not shown) - fuel admission control valves 5 (LPG) and 15 (gasoline) for connecting either the first or the second sub-system to the combustion chambers or - of course - for interrupting any fuel supply when the engine does not need to work.

The first sub-system comprises a gasoline fuel tank 13, a fuel transfer pump 16, a fuel supply pipe 18, the injection pump 14 and the admission control valve 15 has been discussed in the preceding. Pump 16 pumps the fuel 17 (gasoline) inside the tank 13 towards the high pressure injection pump 14. If opened by the coordinating fuelling control system (selecting gasoline as the engine's fuel), the admission control valve 15 will admit the pressurized (fluid) gasoline to be injected into the distribution rail 1 and the combustion chambers 2.

The second sub-system, comprising the fuel tank 3, the fuel pump 6, the fuel circulation circuit 8, the injection pump 4 and admission control valve 5 has been discussed in the preceding. In short, pump 6 pumps the fuel 7 (LPG or propane) inside the tank 3 towards the high pressure injection pump 4. If opened by the coordinating fuelling control system (selecting LPG as the engine's fuel), the admission control valve 5 will admit the pressurized (kept properly fluid thanks to the inventive the fuel circulation circuit 8) LPG to be injected into the distribution rail 1 and the combustion chambers 2.

In figure 1 the LPG fuel pump 6 is arranged to bring the fuel circulation circuit at an intermediate pressure, between the pressure within the fuel tank and the injection pressure, e.g. 5 to 10 bars above the tank pressure of about 5-20 bars. Via the fuel circulation circuit 8 the fuel having a pressure of e.g. about 10 to 30bars is supplied to the injection pump 4 which increases the pressure with e.g. 10 to 90 bars to e.g. 30 to 100 bars, with which the fluid LPG can be injected.

As an alternative, the fuel pump 6 could be arranged to bring the fuel circulation circuit 8 not at the intermediate pressure of e.g. 5 to 10 bars above the tank pressure, but instead, directly at said injection pressure of e.g. 35 bars. In this alternative embodiment the injection pump 4 thus can be omitted and the fuel circulation circuit 8 can be connected directly to the fuel admission control valve 5.

Finally, in figure 1 two overpressure protection circuits 11 and 12 are drawn, including safety valves 19,20, via which the pressurized fuel may be led back to the relevant supply pipe 8 or 18 respectively in case of overpressure in the distribution rail 1. Both circuits 11 and 12 are, moreover, fitted with respective control valves 21,22.

## Claims

1. System for fuelling combustion chambers (2) of a combustion engine by means of high pressure fuel injection into those combustion chambers of a fuel (7) which is gaseous at atmospheric conditions comprising an injection pressure pump (4,6) for bringing the relevant fuel at the required injection pressure and fuel admission control means (5), the system, moreover, comprising a fuel tank (3) and a fuel pump (6) having its inlet (6a) connected to the fuel tank and its outlet (6b) connected to a fuel circulation circuit (8) being, at its other side (8b), connected to the fuel tank (3), which fuel circulation circuit is connected, directly or indirectly, to said fuel admission control means.

2. System according to claim 1, comprising
- a first sub-system for fuelling the combustion chambers (2) with a fuel (17) which is liquid at atmospheric conditions;
- a second sub-system for fuelling the combustion chambers with a fuel (7) which is gaseous at atmospheric conditions;
- each sub-system comprising an injection pressure pump (4,6,14) for bringing the relevant fuel at the required injection pressure;
- fuel admission control means (5,15) for connecting either the first or the second sub-system to the combustion chambers;
- the second sub-system comprising a fuel tank (3) and a fuel pump (6) having its inlet (6a) connected to the fuel tank and its outlet (6b) connected to a fuel circulation circuit (8) being, at its other side (8b), connected to the fuel tank (3), which fuel circulation circuit (8) is connected, directly or indirectly, to said fuel admission control means (5).

3. System according to claim 1 or 2, said fuel pump (6) being arranged to bring the fuel circulation circuit (8) at an intermediate pressure, between the pressure within the fuel tank and the injection pressure, and the fuel circulation circuit being connected to said injection pressure pump (4).

4. System according to claim 1 or 2, said fuel pump (6) being arranged to bring the fuel circulation circuit (8) at said injection pressure and the fuel circulation circuit being connected directly to the fuel admission control means (5).

5. System according to claim 1 or 2, the fuel circulation circuit comprising cooling means (9) for cooling the fuel circulating within the fuel circulation circuit.
